# EUROPÄISCHE PATENTANMELDUNG

(11) **EP 2 418 746 A2**
(43) Veröffentlichungstag der Anmeldung: **15.02.2012**
(21) Anmeldenummer: 11172859.8
(22) Anmeldetag: 06.07.2011
(51) Int. Cl.: H02G 3/08, H02G 3/12

(54) **Gerätedose für Installationsgeräte**

(30) Priorität: 13.08.2010 DE 102010034862
(71) Anmelder: OBO Bettermann GmbH & Co. KG, 58710 Menden (DE)
(72) Erfinder: Raschke, Jörg, 51674 Wiehl (DE)
(74) Vertreter: Patentanwälte Ruff, Wilhelm, Beier, Dauster & Partner

(57) **Zusammenfassung**

Die Erfindung betrifft eine Gerätedose für Installationsgeräte mit einem trogförmigen Gehäuse zum Aufnehmen von Installationsgeräten. Erfindungsgemäß weist das Gehäuse wenigstens ein erstes und ein zweites Gehäusebauteil auf und die wenigstens zwei Gehäusebauteile weisen aneinander angepasste Befestigungseinrichtungen auf, um die wenigstens zwei Gehäusebauteile in wenigstens zwei unterschiedlichen Relativpositionen miteinander zu verbinden, wobei jeder der Relativpositionen eine andere Länge des Gehäuses zugeordnet ist.

## Beschreibung

Die Erfindung betrifft eine Gerätedose für Installationsgeräte mit einem trogförmigen Gehäuse zum Aufnehmen von Installationsgeräten.

Bekannte Gerätedosen werden beispielsweise in Leitungskanäle eingebaut, und nehmen beispielsweise Schutzkontaktsteckdosen auf. Durch die Gerätedosen können die an der Rückseite der Schutzkontaktsteckdosen zugeführten Leitungen verdeckt und gegen Verschmutzung sowie Zugriff gesichert werden. Bekannte Gerätedosen stehen in unterschiedlichen Längen zur Verfügung, um beispielsweise 2, 3 oder mehr Installationsgeräte nebeneinander einzubauen. Aufgrund der unterschiedlichen Breite der Installationsgeräte, wenn beispielsweise Steckdosen ohne Schutzkontakt oder auch Datenanschlüsse vorgesehen werden sollen, wird eine große Anzahl von Gerätedosen mit unterschiedlicher Länge benötigt.

Mit der Erfindung soll eine variabel einsetzbare Gerätedose bereitgestellt werden.

Erfindungsgemäß ist hierzu eine Gerätedose für Installationsgeräte mit einem trogförmigen Gehäuse zum Aufnehmen von Installationsgeräten vorgesehen, bei der das Gehäuse wenigstens ein erstes und ein zweites Gehäusebauteil aufweist und bei der die wenigstens zwei Gehäusebauteile aneinander angepasste Befestigungseinrichtungen aufweisen, um die wenigstens zwei Gehäusebauteile in wenigstens zwei unterschiedlichen Relativpositionen miteinander zu verbinden, wobei jede der Relativpositionen einer anderen Länge des Gehäuses zugeordnet ist.

Indem die erfindungsgemäße Gerätedose wenigstens zwei Gehäusebauteile aufweist, die in unterschiedlichen Relativpositionen miteinander verbunden werden können, wird eine flexibel einsetzbare Gerätedose geschaffen, in der beispielsweise je nach eingestellter Länge eines, zwei, drei oder auch mehr Installationsgeräte angeordnet werden können. Das Vorsehen von aneinander angepassten Befestigungseinrichtungen an den wenigstens zwei Gehäusebauteilen ermöglicht es, in den unterschiedlichen Relativpositionen jeweils ein stabiles, trogförmiges Gehäuse zu erhalten, das seine Schutzfunktion erfüllen kann. Der Erfindung liegt unter anderem die Erkenntnis zugrunde, dass die Stabilitätsanforderungen an Gerätedosen für Installationsgeräte nur gering sind, da diese ohnehin stets eingebaut werden, beispielsweise in Leitungskanäle. Es ist daher möglich, die wenigstens zwei Gehäusebauteile mit geeigneten Befestigungseinrichtungen zu versehen, die in unterschiedlichen Relativpositionen verbunden werden können, um dadurch unterschiedliche Längen der Gerätedose realisieren zu können. Durch die Erfindung wird die Herstellung und Lagerhaltung erheblich vereinfacht, da nicht mehr für jede benötigte Länge eine spezielle Gerätedose gefertigt und auf Lager gehalten werden muss. Vielmehr kann die erfindungsgemäße Gerätedose auf unterschiedliche Längen eingestellt werden. Die erfindungsgemäße Gerätedose kann dadurch in höheren Stückzahlen und damit kostengünstiger hergestellt werden als herkömmliche Gerätedosen.

In Weiterbildung der Erfindung sind die Befestigungseinrichtungen ausgebildet, um die wenigstens zwei Gehäusebauteile relativ zueinander in Längsrichtung des Gehäuses zu verschieben.

Durch eine solche Ausbildung der Befestigungseinrichtungen lässt sich eine benötigte Länge des Gehäuses in einfacher Weise einstellen und, wenn dies erforderlich ist, können auch Zwischengrößen eingestellt werden. Beispielsweise sind an den Gehäusebauteilen Längsführungen vorgesehen, in denen das jeweils andere Gehäusebauteile geführt ist. Bei jeder einstellbaren Länge des Gehäuses sind die wenigstens zwei Gehäusebauteile dadurch sicher und dennoch verschiebbar zueinander verbunden.

In Weiterbildung der Erfindung weist das erste Gehäusebauteil wenigstens einen leistenförmigen Vorsprung und das zweite Gehäusebauteil wenigstens eine an den leistenförmigen Vorsprung angepasste Nut auf.

Mittels eines leistenförmigen Vorsprungs und einer passenden Nut lässt sich eine zuverlässige Längsführung realisieren, die beispielsweise mittels Kunststoffspritzguß mit engen Toleranzen realisierbar ist.

In Weiterbildung der Erfindung ragt ein Boden des ersten Gehäusebauteils seitlich wenigstens abschnittsweise über die Seitenwände des ersten Gehäusebauteils hinaus, wodurch an beiden Außenseiten des ersten Gehäusebauteils die leistenförmigen Vorsprünge ausgebildet sind.

Auf diese Weise lassen sich zwei leistenförmige Vorsprünge an einem der Gehäusebauteile in konstruktiv einfacher Weise realisieren. Die leistenförmigen Vorsprünge sind dadurch auf Bodenhöhe des Gehäusebauteils angeordnet. Zusammen mit einer weiteren Längsführung bzw. Abstützung in einem oberen Bereich oberhalb eines oberen Randes des Gehäusebauteils lässt sich dadurch eine stabile Längsführung der wenigstens zwei Gehäusebauteile aneinander realisieren.

In Weiterbildung der Erfindung weisen die Seitenwände des zweiten Gehäusebauteils unmittelbar oberhalb des Bodens wenigstens abschnittsweise eine geringere Wandstärke als im übrigen Bereich auf, wodurch in beiden Seitenwänden des Gehäusebauteils die Nuten ausgebildet sind.

Durch diese Maßnahmen lassen sich unmittelbar oberhalb des Bodens Nuten als Teil einer Längsführung ausbilden. Sind dann die leistenförmigen Vorsprünge auf Bodenhöhe des jeweils anderen Gehäusebauteils ausgebildet, so ergibt sich bereits durch die aufeinander aufliegenden Böden und aneinander anliegenden Seitenwände der beiden Gehäusebauteile zusammen mit den in den Nuten geführten leistenförmigen Vorsprüngen eine stabile Längsführung, bei der die Gefahr des Verkantens der beiden Gehäusebauteile zueinander nicht mehr besteht oder gering ist.

In Weiterbildung der Erfindung weist wenigstens eine Seitenwand des ersten und/oder zweiten Gehäusebauteils abschnittsweise eine geringere Höhe als die zugeordnete Seitenwand des zweiten bzw. ersten Gehäusebauteils auf und an der zugeordneten Seitenwand des zweiten bzw. ersten Gehäusebauteils ist wenigstens ein Vorsprung angeordnet, an dem eine Oberkante der Seitenwand des ersten bzw. zweiten Gehäusebauteils abschnittsweise anliegt.

Auf diese Weise wird eine Längsführung realisiert, indem eine Oberkante der Seitenwand eines Gehäusebauteils an der Unterkante eines Vorsprungs einer Seitenwand des jeweils anderen Gehäusebauteils anliegt und dadurch während einer Längsbewegung geführt wird. Dadurch kann eine konstruktiv einfache und gleichzeitig stabile und wenig empfindliche Längsführung realisiert werden.

In Weiterbildung der Erfindung ist wenigstens eine Seitenwand des ersten Gehäusebauteils abschnittsweise um die Wandstärke der Seitenwand des zweiten Gehäusebauteils nach innen versetzt, wobei in wenigstens einer der Relativpositionen von erstem und zweiten Gehäusebauteil eine Innenseite der Seitenwand des zweiten Gehäusebauteils abschnittsweise an dem nach innen versetzten Abschnitt der Seitenwand des ersten Gehäusebauteils anliegt.

Durch abschnittsweises Versetzen einer Seitenwand des ersten Gehäusebauteils um die Wandstärke der Seitenwand des zweiten Gehäusebauteils nach innen kann im vollständig zusammengeschobenen Zustand der beiden Gehäusebauteile eine glattflächige Außenwand realisiert werden. Gleichzeitig kann dadurch ein Längenanschlag realisiert werden. Bei anderen Längeneinstellungen, die eine größere als die minimale Länge ergeben, liegt eine Innenseite der Seitenwand des einen Gehäusebauteils an einer Außenseite der Seitenwand des jeweils anderen Gehäusebauteils an und sorgt dadurch für die Realisierung einer Längsführung und vermeidet ein Verkippen der beiden Gehäusebauteile beim relativen Verschieben.

In Weiterbildung der Erfindung ist ein Boden und/oder wenigstens eine Seitenwand des ersten Gehäusebauteils mit wenigstens einem Rastvorsprung versehen und ein Boden bzw. wenigstens eine Seitenwand des zweiten Gehäusebauteils ist mit einer zu dem Rastvorsprung passenden Raststelle versehen.

Das Vorsehen von Rastvorsprüngen und passenden Raststellen ermöglicht es, vordefinierte Längen des trogartigen Gehäuses der Gerätedose in sehr einfacher Weise einzustellen. Die Raststellen und Rastvorsprünge sind dabei so angeordnet, dass die beiden Gehäusebauteile beispielsweise bei einer Länge einrasten, die für eines, zwei, drei oder mehr Installationsgeräte geeignet ist.

In Weiterbildung der Erfindung ist wenigstens eines der Gehäusebauteile mit seitlich auskragenden Rasthaken zum Einhängen in Rinnen eines Leitungskanals versehen.

Auf diese Weise kann die Gerätedose in einfacher Weise in einem Leitungskanal angeordnet werden. Durch das Einhängen in die Rinnen eines Leitungskanals wird die erfindungsgemäße Gerätedose dann stabilisiert, so dass nur geringe Festigkeitsanforderungen an die Befestigungseinrichtungen bzw. Längsführungen gestellt werden, mit denen die Gehäusebauteile der erfindungsgemäßen Gerätedose miteinander verbunden sind.

In Weiterbildung der Erfindung ist wenigstens eines der Gehäusebauteile mit vom Boden aus nach unten abragenden Rasthaken zum Einhängen in Bodenschienen eines Leitungskanals versehen.

Auf diese Weise kann die erfindungsgemäße Gerätedose in sehr einfacher Weise in einem Leitungskanal befestigt werden und wird durch das Einhängen in Bodenschienen des Leitungskanals gleichzeitig stabilisiert. Auch dadurch werden an die Festigkeit der Befestigungseinrichtungen bzw. Längsführungen, die das Einstellen einer unterschiedlichen Länge der erfindungsgemäßen Gerätedose erlauben, nur geringe Anforderungen gestellt.

Weitere Merkmale und Vorteile der Erfindung ergeben sich aus den Ansprüche und der nachfolgenden Beschreibung bevorzugter Ausführungsformen der Erfindung im Zusammenhang mit den Zeichnungen. Einzelmerkmale der unterschiedlichen dargestellten Ausführungsformen lassen sich dabei in beliebiger Weise kombinieren, ohne den Rahmen der Erfindung zu überschreiten. In den Zeichnungen zeigen:
- Fig.1: eine Ansicht einer erfindungsgemäßen Gerätedose von schräg oben in einer ersten Relativposition von zwei Gehäusebauteilen der Gerätedose zueinander,
- Fig. 2: eine Ansicht der erfindungsgemäßen Gerätedose von schräg oben in einer zweiten Relativposition der beiden Gehäusebauteile der Gerätedose zueinander,
- Fig. 3: eine Ansicht der erfindungsgemäßen Gerätedose von schräg oben in einer dritten Relativposition der beiden Gehäusebauteile der Gerätedose zueinander,
- Fig. 4: die Darstellung des ersten Gehäusebauteils der Gerätedose der Fig. 1 von schräg oben,
- Fig. 5: eine abschnittsweise, vergrößerte Darstellung des Gehäusebauteils der Fig. 4,
- Fig. 6: eine Darstellung des zweiten Gehäusebauteils der Gerätedose der Fig. 1 von schräg vorne,
- Fig. 7: das Gehäusebauteil der Fig. 6 von schräg unten,
- Fig. 8: die Gerätedose der Fig. 2 von schräg unten,
- Fig. 9: die Gerätedose der Fig. 1 von schräg unten.
- Fig. 10: die erfindungsgemäßen Gerätedose eingebaut in einen ersten Leitungskanal von vorne und
- Fig. 11: die erfindungsgemäßen Gerätedose eingebaut in einen zweiten Leitungskanal von vorne.

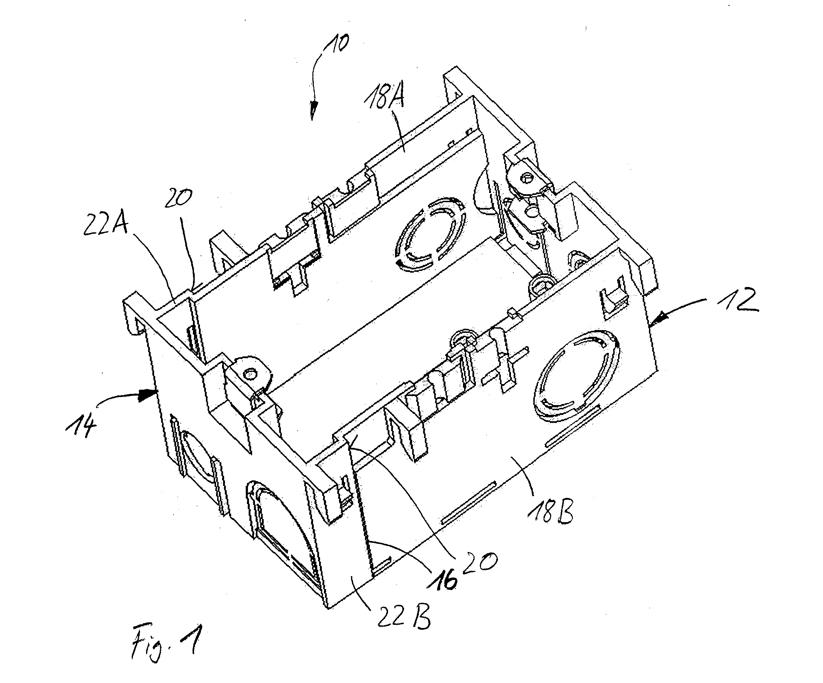

Die Darstellung der Fig. 1 zeigt eine erfindungsgemäße Gerätedose 10 gemäß einer ersten Ausführungsform der Erfindung. Die Gerätedose 10 weist ein erstes Gehäusebauteil 12 und ein zweites Gehäusebauteil 14 auf, wobei die beiden Gehäusebauteile 12, 14 in einer ersten Relativposition zueinander miteinander verbunden sind. Wie noch erläutert wird, sind die beiden Gehäusebauteile 12, 14 verschiebbar miteinander verbunden und die in Fig. 1 dargestellte Relativposition ergibt die geringst mögliche Länge der Gerätedose 10, in der ein Installationsgerät, beispielsweise eine Doppelsteckdose, in die Gerätedose eingebaut werden kann. In dieser ersten Relativposition stößt eine Vorderkante 16 einer Seitenwand 18B des ersten Gehäusebauteils an einen Absatz 20 in der Seitenwand 22B des zweiten Gehäusebauteils 14 an. Der Absatz 20 ist dadurch gebildet, dass die Seitenwand 22B abschnittsweise um die Wandstärke der Seitenwand 18B des ersten Gehäusebauteils 12 nach innen versetzt ist. Beide gegenüberliegende Seitenwände 22A, 22B des zweiten Gehäusebauteils 14 weisen in ihrer jeweiligen Seitenwand 22A, 22B einen Absatz 20 auf, an dem dann die jeweilige Vorderkante 16 der Seitenwände 18A, 18B des ersten Gehäusebauteils 12 anliegt.

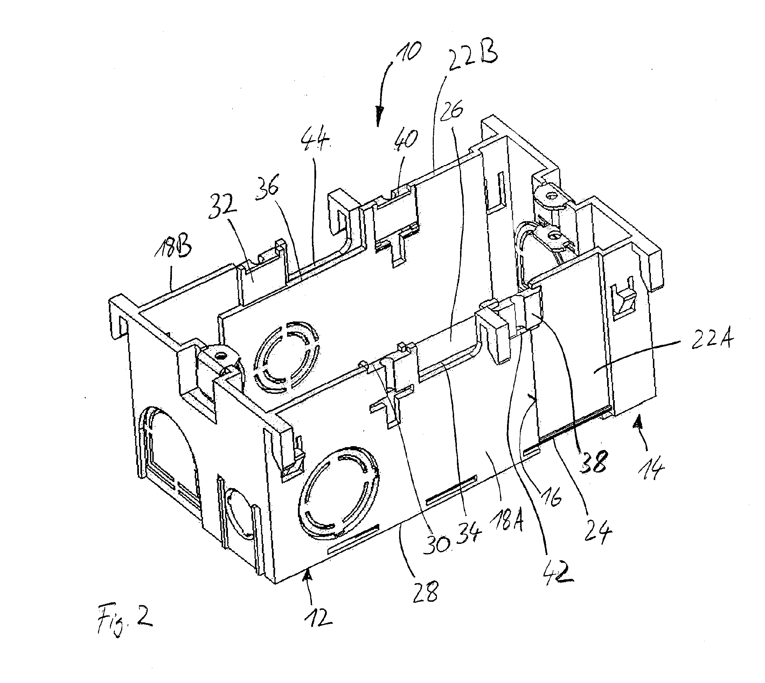

Die Darstellung der Fig. 2 zeigt die Gerätedose 10 der Fig. 1 in einer zweiten Relativposition des ersten Gehäusebauteils 12 und des zweiten Gehäusebauteils 14 zueinander. Gegenüber der Darstellung der Fig. 1 ist die Gerätedose 10 um etwa 180° gedreht, so dass das erste Gehäusebauteil 12 nun links und das zweite Gehäusebauteil 14 nun rechts angeordnet ist.

In der Darstellung der Fig. 2 ist zu erkennen, dass die beiden Gehäusebauteile 12, 14 im Vergleich zur Relativposition der Fig. 1 auseinander gezogen wurden und die Gerätedose 10 nun eine größere Länge aufweist. Die beiden Gehäusebauteile 12, 14 werden dabei durch Längsführungen aneinander geführt. So weist das zweite Gehäusebauteil 14 am unteren Ende seiner Seitenwand 22A bzw. dem nach innen versetzten Abschnitt der Seitenwand 22A einen leistenförmigen Vorsprung 24 auf, der durch eine seitliche Verlängerung eines Bodens 26 des Gehäusebauteils 14 über die Seitenwand 22A hinaus gebildet ist. Das erste Gehäusebauteil 12 weist unmittelbar oberhalb seines Bodens 28 eine an den leistenförmigen Vorsprung 24 angepasste Nut auf, die in der Darstellung der Fig. 2 allerdings nicht zu erkennen ist. Die gegenüberliegende Seitenwand 22B weist ebenfalls einen leistenförmigen Vorsprung 24 auf und die Seitenwand 18B ist ebenfalls mit einer angepassten Nut versehen, was in Fig. 2 nicht zu erkennen ist. Die beiden Gehäusebauteile 12, 14 somit durch zwei Längsnuten im ersten Gehäusebauteil 12 und die in diese Nuten eingreifenden leistenförmigen Vorsprünge 24 am zweiten Gehäusebauteil 14 während einer Verschiebebewegung relativ zueinander geführt.

Zusätzlich weist das erste Gehäusebauteil 12 noch zwei Vorsprünge 30, 32 auf, die sich jeweils von der zugeordneten Seitenwand 18A, 18B aus nach innen erstrecken. An einer Unterseite dieser Vorsprünge 30, 32 liegt dann eine Oberkante 34, 36 der jeweiligen Seitenwand 22A, 22B des zweiten Gehäusebauteils 14 an. Dadurch wird vermieden, dass die beiden Gehäusebauteile 12, 14 auseinander klappen bzw. wird verhindert, dass die Längsführung durch die leistenförmigen Vorsprünge 24 und die passenden Nuten zu stark belastet wird. Da die Vorsprünge 30, 32 die Oberkante 34, 36 der jeweils zugeordneten Seitenwand führen und die leistenförmigen Vorsprünge 24 auf Bodenhöhe angeordnet sind, werden eventuell auftretenden Biegekräfte aufgrund des großen Abstands zwischen diesen beiden Längsführungen verlässlich aufgenommen.

In ähnlicher Weise weist das zweite Gehäusebauteil 14 zwei sich von den Seitenwänden 22A, 22B des zweiten Gehäusebauteils 14 aus nach außen erstreckende Vorsprünge 38, 40 auf. An der jeweiligen Unterkante dieser Vorsprünge 38, 40 liegt jeweils eine Oberkante 42, 44 der Seitenwände des ersten Gehäusebauteils 12 an, um auch dadurch eine Längsführung bereitzustellen.

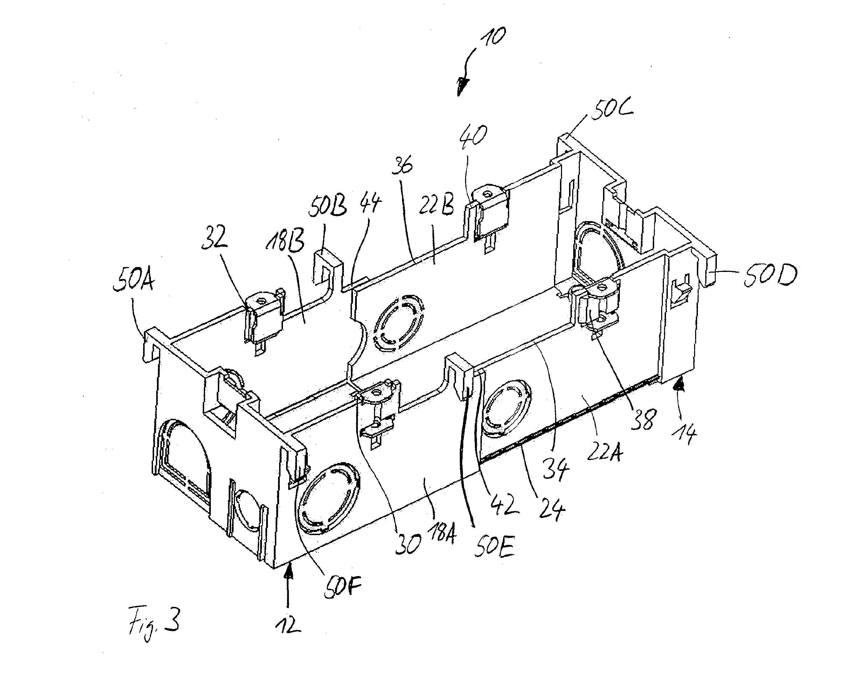

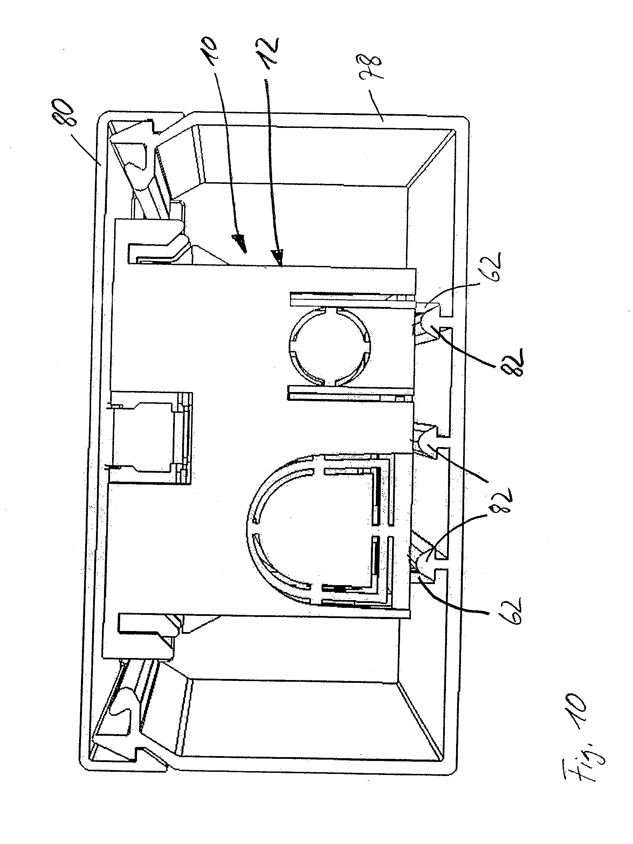

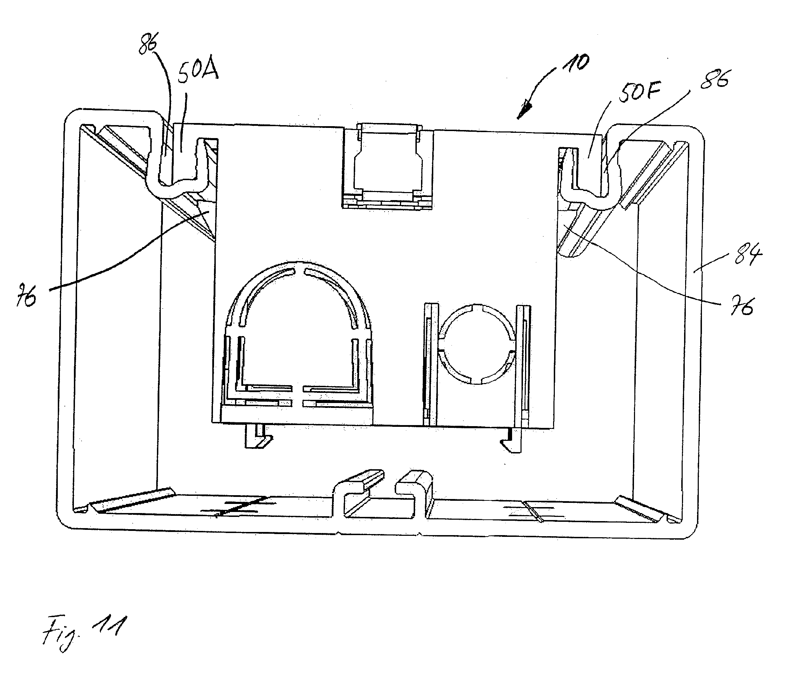

Die Darstellung der Fig. 3 zeigt die Gerätedose 10 bei einer dritten Relativposition des ersten Gehäusebauteils 12 und des zweiten Gehäusebauteils 14 zueinander. Die beiden Gehäusebauteile 12, 14 sind nun soweit auseinander gezogen, dass die Seitenwände 22A, 22B des zweiten Gehäusebauteils 14 und die Seitenwände 18A, 18B des ersten Gehäusebauteils 12 nur noch über eine vergleichsweise kurze Länge überlappen. Auch die leistenförmigen Vorsprünge 24 am zweiten Gehäusebauteile 14 sind nur noch auf einer kurzen Länge in den passenden Nuten des ersten Gehäusebauteils 12 geführt. In der in Fig. 3 dargestellten Relativposition der beiden Gehäusebauteile 12, 14 zueinander kann die Gerätedose 10 dadurch vergleichsweise leicht auseinander klappen, da auch die Oberkanten 42, 44 der Seitenwände 18A, 18B nicht mehr an der Unterseite der Vorsprünge 38, 40 anliegen und in gleicher Weise auch die Oberkanten 34, 36 der Seitenwände 22A, 22B nicht mehr an der Unterseite der Vorsprünge 30, 32 anliegen. Die Gerätedose 10 wird aber, wie noch erläutert wird, vor dem Einsetzen von Installationsgeräte mittels Rasthaken 50A, 50B, 50C, 50D, 50E, 50F in Rinnen eines nicht dargestellten Leitungskanals eingehängt, siehe Fig. 11, oder an Bodenschienen eines Leitungskanals verrastet, siehe Fig. 10. Im montierten Zustand der Gerätedose 10 können die beiden Gehäusebauteile 12, 14 dadurch nicht mehr zueinander verkippen, so dass die Festigkeitsanforderungen an die Längsführung zwischen den Gehäusebauteilen 12, 14 nur gering sind.

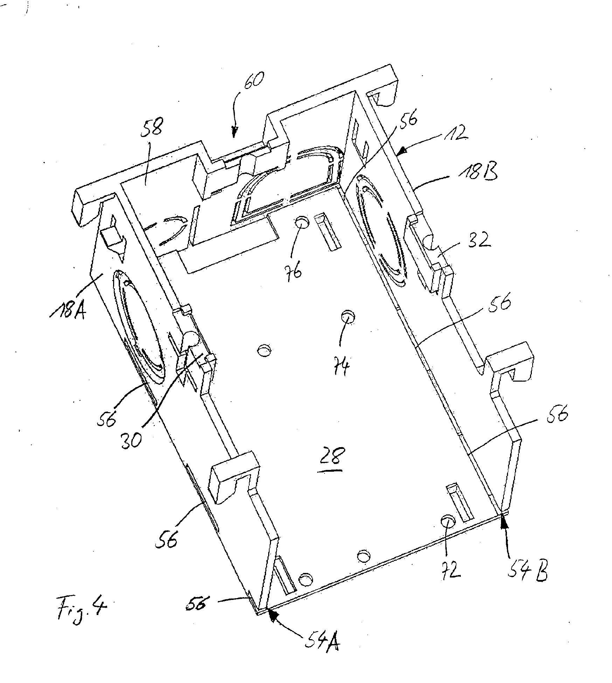

Die Darstellung der Fig. 4 zeigt das erste Gehäusebauteil 12 in einer Ansicht von schräg oben.

Am Übergang zwischen dem Boden 28 und den Seitenwänden 18A, 18B ist die Wandstärke der Seitenwände 18A, 18B verringert, so dass zu beiden Seiten des Bodens 28 Nuten 54A, 54B ausgebildet sind. Diese Nuten 54A, 54B dienen, wie bereits erläutert wurde, zur Aufnahme der leistenförmigen Vorsprünge 24 an dem zweiten Gehäusebauteil 14, siehe Fig. 3. Die Nuten 54A, 54B erstrecken sich über die gesamte Länge des Bodens 28 des ersten Gehäusebauteils 12. Im Bereich der Nuten 54A, 54B sind zusätzlich auf jeder Seite drei Durchbrüche 56 vorgesehen. Im Bereich der Durchbrüche 56 besteht dadurch keine Verbindung zwischen dem Boden 28 und den Seitenwänden 54A, 54B. Die Durchbrüche 56 sind nicht einander gegenüberliegend sondern in Längsrichtung zueinander versetzt, so dass ein Durchbruch 56 im Bereich der Nut 54B keinem Durchbruch 56 im Bereich der Nut 54A gegenüberliegt.

Eine Stirnwand 58 des ersten Gehäusebauteils 12 ist mit einer balkonartigen Einbuchtung 60 versehen. Diese balkonartige Einbuchtung 60 dient, wie Fig. 1 zu entnehmen ist, der Anordnung von Metallhalteklammern, in die dann Befestigungsschrauben für Abdeckplatten oder Installationsgeräte eingeschraubt werden können. Gleiche Metallklammern können auch über die Vorsprünge 30, 32 geschoben werden, wie Fig. 3 zu entnehmen ist.

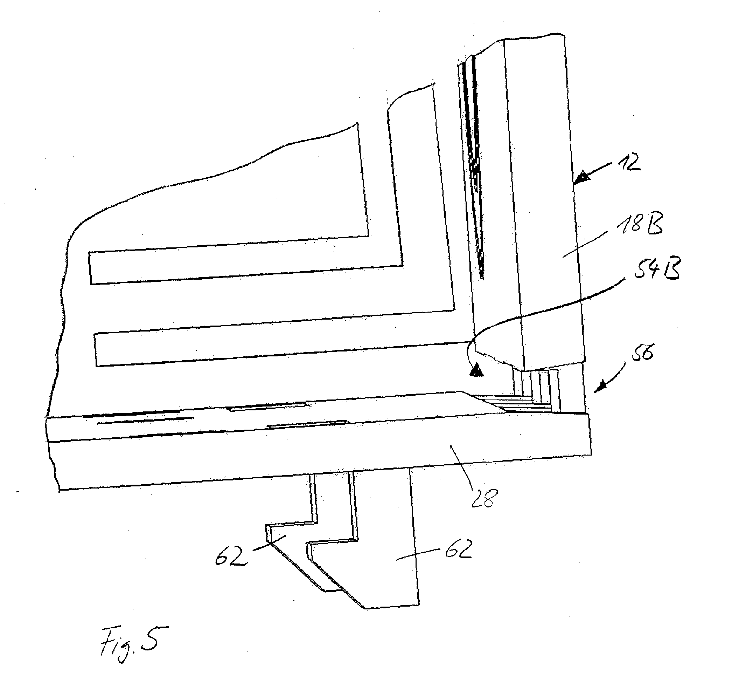

Die Darstellung der Fig. 5 zeigt eine in Fig. 4 rechte untere Ecke des ersten Gehäusebauteils 12 in vergrößerter Darstellung. Im Eckbereich am Übergang zwischen dem Boden 28 und der Seitenwand 18B ist die Wandstärke der Seitenwand 18B verringert, so dass im Eckbereich die Nut 54B ausgebildet ist. Wie anhand der Fig. 5 zu erkennen ist, sind die Durchbrüche 56 so ausgebildet, dass sich ihre Höhe in Richtung auf den Innenraum des ersten Gehäusebauteils 12 zu verringert. Dadurch wird die Herstellbarkeit des ersten Gehäusebauteils 12 erleichtert. Beispielsweise werden die Durchbrüche 56 beim Kunststoffspritzguß mittels Vorsprüngen realisiert, die sich verjüngen. Diese Gestaltung erleichtert die Entformbarkeit des ersten Gehäusebauteils 12 nach dem Spritzgießen.

In der Darstellung der Fig. 5 sind auch auf der Unterseite des Bodens 28 angeordnete Rasthaken 62 zu erkennen. Diese Rasthaken 62 sind dafür vorgesehen, in passenden Bodenschienen eines Leitungskanals eingehängt zu werden, siehe Fig. 10. Mittels der Rasthaken 62 kann die Gerätedose 10 dadurch sicher an einem Leitungskanal befestigt werden.

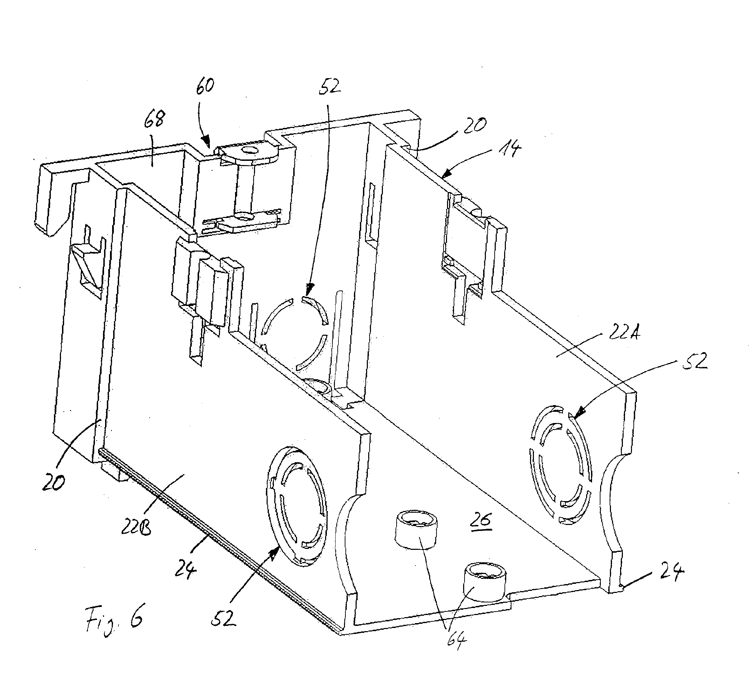

Die Darstellung der Fig. 6 zeigt das zweite Gehäusebauteil 14 in einer Ansicht von schräg vorne. Zu Erkennen sind die beiden leistenförmigen Vorsprünge 24, die auf Höhe des Bodens 26 angeordnet sind und sich über die Seitenwände 22A, 22B seitlich hinaus erstrecken. Die Materialstärke der leistenförmigen Vorsprünge 24 ist aber geringer als die Materialstärke des Bodens 26. Die leistenförmigen Vorsprünge 24 laufen von einem in Fig. 6 vorderen Ende des zweiten Gehäusebauteils 14 durch bis zu dem Absatz 20, an dem beide Seitenwänden 22A, 22B um die Materialstärke der Seitenwände 18A, 18B des ersten Gehäusebauteils 12 nach innen versetzt sind.

Das zweite Gehäusebauteil 14 ist mit mehreren, vorbereiteten Sollbruchstellen versehen. Das Material innerhalb dieser Sollbruchstellen kann herausgebrochen werden, um einen Zugang für Leitungskabel zu schaffen. An der Stirnwand 68 ist wie bei dem Gehäusebauteil 12 ein identischer Balkon 60 angeordnet, auf den eine Blechklammer aufgeschoben ist.

Am Boden 26 sind zwei Buchsen 64 angeordnet. Diese Buchsen 64 sind zur Aufnahme von Befestigungsschrauben vorgesehen, mit denen die Gerätedose 10 beispielsweise an der Unterseite eines Leitungskanals verankert werden kann.

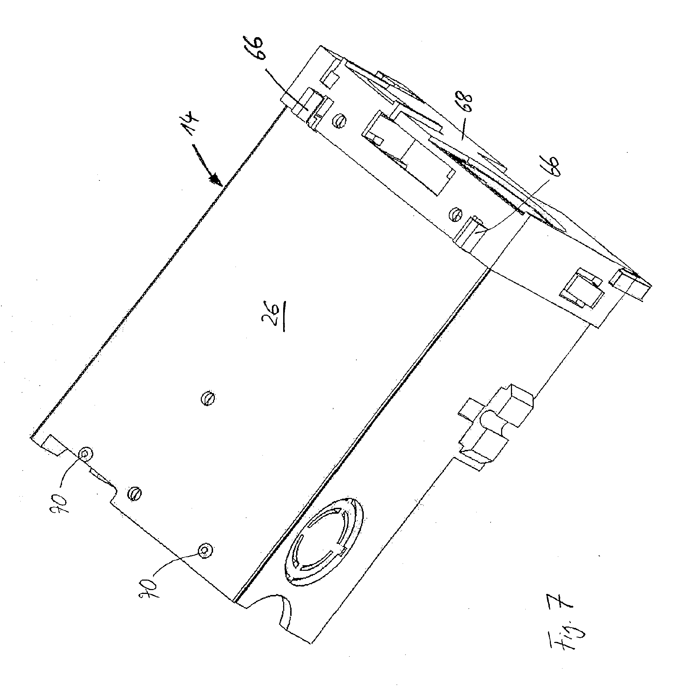

Die Darstellung der Fig. 7 zeigt das zweite Gehäusebauteil 14 in einer Ansicht von schräg unten. Auch das Gehäusebauteil 14 ist mit Rasthaken 66 an seinem Boden 26 versehen, um das Gehäusebauteil 14 an passenden Raststellen am Boden eines Leitungskanals verrasten zu können, siehe Fig. 10 . Der Boden 26 ist im Bereich seines in der Fig. 7 linken Endes, das der Stirnwand 68 des Gehäusebauteils 14 gegenüber liegt, mit zwei Rastvorsprüngen 70 versehen. Diese Rastvorsprünge 70 erstrecken sich vom Boden 26 aus vom Innenraum des Gehäusebauteils 14 weg, in der Darstellung der Fig. 7 also nach oben. Die Rastvorsprünge 70 sind dafür vorgesehen, in Durchgangsöffnungen 72 im Boden 52 des ersten Gehäusebauteils 12 einzurasten, siehe Fig. 4. Wenn die Rastvorsprünge 70 in die Durchgangsbohrungen 72 eingerastet sind, weist die Gerätedose 10 eine maximale vordefinierte Länge auf, beispielsweise zur Anordnung von vier Installationsgeräten nebeneinander.

Der Boden 28 des ersten Gehäusebauteils 12 ist, siehe Fig. 4, mit weiteren Durchgangsbohrungen 74, 76 versehen, wobei in der Darstellung der Fig. 4 jeweils nur eine Durchgangsbohrung 74, 76 erkennbar ist. Es ist aber jeweils eine zweite Durchgangsbohrung 74, 76 vorhanden, wobei die Durchgangsbohrungen 74, 76 dann im gleichen Abstand zueinander liegen wie die Durchgangsbohrungen 72. Die Durchgangsbohrungen 74, 76 definieren weitere Raststellen zur Einstellung einer anderen Länge der Gerätedose 10. Beispielsweise weist die Gerätedose 10 dann, wenn die Vorsprünge 70 in die Durchgangsbohrungen 74 einrasten eine Länge auf, die auf die Anordnung von drei Installationsgeräten abgestimmt ist und weist beim Einrasten in die Durchgangsbohrungen 76 eine Länge auf, die zur Anordnung von zwei Installationsgeräten geeignet ist.

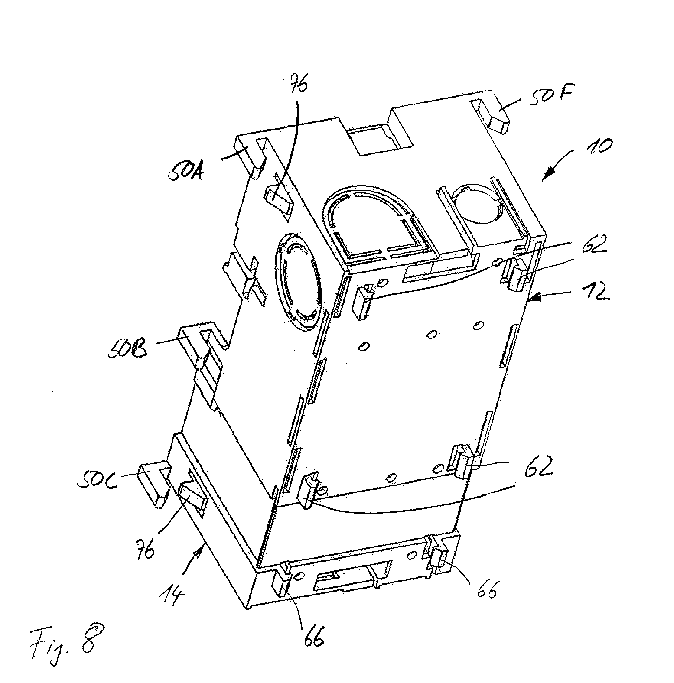

Die Darstellung der Fig. 8 zeigt die Gerätedose 10 in einer Ansicht von schräg unten, wobei eine der Fig. 2 entsprechende Länge eingestellt ist. Zu erkennen sind die Rasthaken 66 und 62 zum Verrasten an Bodenschienen eines Leitungskanals. Alternativ wird die Gerätedose 10 in Rinnen eines Leitungskanals mittels der Rasthaken 50A bis 50F eingehängt. Gegenüber den Rasthaken 50A, 50C, 50D und 50F sind federnde Rasthaken 76 in der jeweiligen Seitenwand der Gehäusebauteile 12, 14 angeordnet. Diese federnden Rasthaken 76 werden beim Einsetzen der Gerätedose 10 in die Rinnen eines Leitungsführungskanals nach innen gedrückt und schnappen dann nach Erreichen der vorgesehenen Position der Gerätedose 10 wieder nach außen, um die Gerätedose 10 dann sicher am Leitungskanal zu halten, siehe Fig. 11.

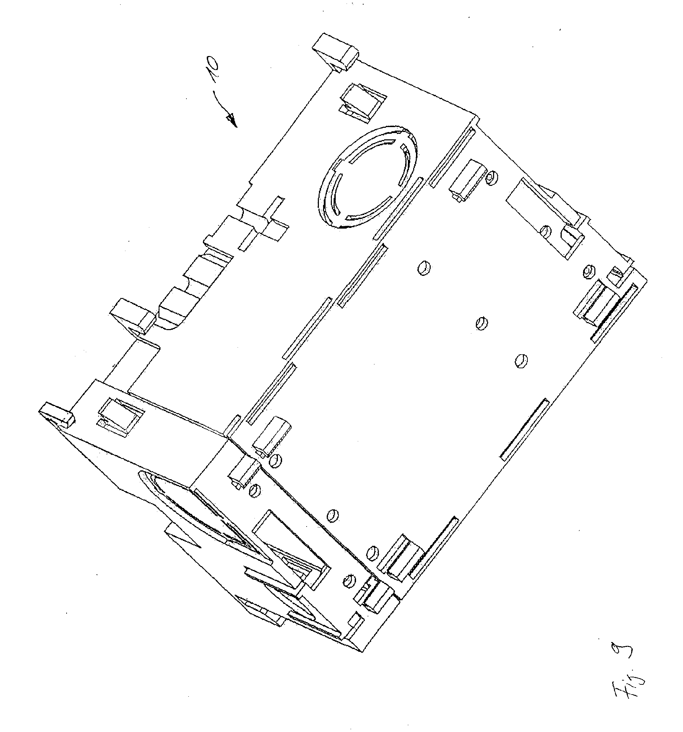

Die Darstellung der Fig. 9 zeigt eine Ansicht der Gerätedose 10 von schräg unten in der Position der Fig. 1, also im vollständig zusammengeschobenen Zustand.

Die Ansicht der Fig. 10 zeigt einen Leitungskanal 78 von vorne, der mit einem Deckel 80 versehen ist und in den eine erfindungsgemäße Gerätedose 10 eingesetzt ist. In der Ansicht der Fig. 10 ist das Gehäusebauteil 12 zu erkennen. Eine Oberkante des Gehäusebauteils 12 liegt kurz unterhalb einer Unterseite des Deckels 80. Die Installationsgeräte ragen über die Überseite des Gehäusebauteils 12 hinaus und erstrecken sich dann in eine Öffnung im Deckel 80, um von der Außenseite des Leitungskanals 78 her zugänglich zu sein.

Der Leitungskanal 78 weist an seinem Boden drei nebeneinander und in Längsrichtung verlaufende Rastschienen 82 mit jeweils pilzförmigen Querschnitt auf. An diesen Rastschienen 82 werden die Rasthaken 62 des Gehäusebauteils 12 eingerastet. In gleicher Weise werden die Rasthaken 66 des Gehäusebauteils 14 an diesen Rastschienen 82 verrastet, was in der Darstellung der Fig. 10 aber nicht erkennbar ist. Nach dem Verrasten der Gehäusebauteile 12, 14 an den Rastschienen 82 ist die Gerätedose 10 sicher am Leitungskanal 78 befestigt.

Die Darstellung der Fig. 11 zeigt die Ansicht eines weiteren Leitungskanals 84 von vorne, in den eine erfindungsgemäße Gerätedose 10 eingehängt ist. Die Gerätedose 10 ist mit ihren Rasthaken 50A bis 50F in Rinnen 86 des Leitungskanals 84 eingehängt. Die Gerätedose 10 ist dadurch sicher an dem Leitungskanal 84 befestigt. Beim Einhängen der Rasthaken 50A bis 50F in die Rinnen 86 werden die federnden Rastvorsprünge 76 zunächst nach innen gedrückt, also in Richtung auf die jeweilige Seitenwand der Gerätedose 10 zu. Nachdem die Gerätedose 10 dann die in Fig. 11 dargestellte Position erreicht hat, schnappen die Rastvorsprünge 76 wieder nach außen in die in Fig. 11 dargestellte Lage. Dadurch wird die Gerätedose 10 zuverlässig an den Rinnen 86 gehalten und kann nicht mehr ohne weiteres nach oben aus dem Leitungskanal 84 herausgezogen werden.

## Patentansprüche

1. Gerätedose für Installationsgeräte mit einem trogförmigen Gehäuse zum Aufnehmen von Installationsgeräten, **dadurch gekennzeichnet, dass** das Gehäuse wenigstens ein erstes und ein zweites Gehäusebauteil (12, 14) aufweist und dass die wenigstens zwei Gehäusebauteile (12, 14) aneinander angepasste Befestigungseinrichtungen aufweisen, um die wenigstens zwei Gehäusebauteile (12, 14) in wenigstens zwei unterschiedlichen Relativpositionen miteinander zu verbinden, wobei jeder der Relativpositionen eine andere Länge des Gehäuses zugeordnet ist.

2. Gerätedose nach Anspruch 1, **dadurch gekennzeichnet, dass** die Befestigungseinrichtungen ausgebildet sind, um die wenigstens zwei Gehäusebauteile (12, 14) relativ zueinander in Längsrichtung des Gehäuses zu verschieben.

3. Gerätedose nach Anspruch 1 oder 2, **dadurch gekennzeichnet, dass** das zweite Gehäusebauteil (14) wenigstens einen leistenförmigen Vorsprung (24) und das erste Gehäusebauteil (12) wenigstens eine an den leistenförmigen Vorsprung (24) angepasste Nut (54A, 54B) aufweist.

4. Gerätedose nach Anspruch 3, **dadurch gekennzeichnet, dass** ein Boden (26) des zweiten Gehäusebauteils (14) seitlich wenigstens abschnittsweise über die Seitenwände (22A, 22B) des zweiten Gehäusebauteils (14) hinausragt, wodurch an beiden Außenseiten des zweiten Gehäusebauteils (14) die leistenförmigen Vorsprünge (24) ausgebildet sind.

5. Gerätedose nach Anspruch 3 oder 4, **dadurch gekennzeichnet, dass** die Seitenwände (18A, 18B) des ersten Gehäusebauteils (12) unmittelbar oberhalb des Bodens (28) wenigstens abschnittsweise eine geringere Wandstärke als im übrigen Bereich aufweisen, wodurch in beiden Seitenwänden (18A, 18B) des ersten Gehäusebauteils (12) die Nuten (54A, 54B) ausgebildet sind.

6. Gerätedose nach einem der vorstehenden Ansprüche, **dadurch gekennzeichnet, dass** wenigstens eine Seitenwand (18A, 18B, 22A, 22B) des ersten und/oder zweiten Gehäusebauteils (12, 14) abschnittsweise eine geringere Höhe als die zugeordnete Seitenwand (18A, 18B, 22A, 22B) des zweiten beziehungsweise ersten Gehäusebauteils (14, 12) aufweist und dass an der zugeordneten Seitenwand (18A, 18B, 22A, 22B) des zweiten beziehungsweise ersten Gehäusebauteils (14, 12) wenigstens ein Vorsprung (30, 32, 38, 40) angeordnet ist, an dem eine Oberkante (34, 36, 42, 44) der Seitenwand (18A, 18B, 22A, 22B) des ersten beziehungsweise zweiten Gehäusebauteils (12, 14) abschnittsweise anliegt.

7. Gerätedose nach einem der vorstehenden Ansprüche, **dadurch gekennzeichnet, dass** wenigstens eine Seitenwand (22A, 22B) des zweiten Gehäusebauteils (14) abschnittsweise um die Wandstärke der Seitenwand (18A, 18B) des ersten Gehäusebauteils (12) nach innen versetzt ist, wobei in wenigstens einer der Relativpositionen von erstem und zweitem Gehäusebauteil (12, 14) eine Innenseite der Seitenwand (18A, 18B) des ersten Gehäusebauteils (12) abschnittsweise an dem nach innen versetzten Abschnitt der Seitenwand (22A, 22B) des zweiten Gehäusebauteils (14) anliegt.

8. Gerätedose nach einem der vorstehenden Ansprüche, **dadurch gekennzeichnet, dass** ein Boden (26) und/oder wenigstens eine Seitenwand des zweiten Gehäusebauteils (14) mit wenigstens einem Rastvorsprung (70) versehen ist und ein Boden (28) beziehungsweise wenigstens eine Seitenwand des ersten Gehäusebauteils (12) mit einer zu dem Rastvorsprung (70) passenden Raststelle (72, 74, 76) versehen ist.

9. Gerätedose nach wenigstens einem der vorstehenden Ansprüche, **dadurch gekennzeichnet, dass** wenigstens eines der Gehäusebauteile (12, 14) mit seitlich auskragenden Rasthaken (50A, 50B, 50C, 50D, 50E, 50F) zum Einhängen in Rinnen eines Leitungskanals (84) versehen ist.

10. Gerätedose nach wenigstens einem der vorstehenden Ansprüche, **dadurch gekennzeichnet, dass** wenigstens eines der Gehäusebauteile (12, 14) mit vom Boden aus nach unten abragenden Rasthaken (62, 66) zum Einhängen in Rastschienen (82) eines Leitungskanals (78) versehen ist.
